# EUROPÄISCHE PATENTANMELDUNG

(11) **EP 2 843 491 A1**
(43) Veröffentlichungstag der Anmeldung: **04.03.2015**
(21) Anmeldenummer: 13182818.8
(22) Anmeldetag: 03.09.2013
(51) Int. Cl.: G05B 19/416, G05B 19/23, G05B 19/29, G05B 19/35, B25J 9/16, G05B 19/19

(54) **Positionierung mit Energie- und/oder Zeitoptimierung**

(71) Anmelder: Siemens Aktiengesellschaft, 80333 München (DE)
(72) Erfinder: Ladra, Uwe, 91056 Erlangen (DE); Linke, Hartmut, Dr., 91056 Erlangen (DE); Schäfers, Elmar, Dr., 90763 Fürth (DE)

(57) **Zusammenfassung**

Ein elektrischer Antrieb (2) wird von einer Antriebsteuerung (3) gemäß einem Beschleunigungsprofil (a(t)) von einer Anfangsposition (P1) zu einer Endposition (P2) verfahren. Das Beschleunigungsprofil (a(t)) weist bei der Anfangsposition (P1) einen Anstieg von 0 auf eine Maximalbeschleunigung (a1) und bei der Endposition (P2) einen Anstieg von einer Minimalbeschleunigung (a2) auf 0 auf. Zwischen der Anfangsposition (P1) und der Endposition (P2) weist das Beschleunigungsprofil (a(t)) einen Abfall von der Maximalbeschleunigung (a1) auf 0 und einen Abfall von 0 auf die Minimalbeschleunigung (a2) auf. Zwischen dem Ansteigen auf die Maximalbeschleunigung (a1) und dem Abfallen auf 0 sowie zwischen dem Abfallen auf die Minimalbeschleunigung (a2) und dem Ansteigen auf 0 verharrt das Beschleunigungsprofil (a(t)) während einer Haltezeit (T3, T4) bei der Maximalbeschleunigung (a1) und der Minimalbeschleunigung (a2). Der Abfall von der Maximalbeschleunigung (a1) auf 0 und der Abfall von 0 auf die Minimalbeschleunigung (a2) sind flacher als der Anstieg von 0 auf die Maximalbeschleunigung (a1) und der Anstieg von der Minimalbeschleunigung (a2) auf 0.

## Beschreibung

Die vorliegende Erfindung betrifft ein Positionierverfahren für einen elektrischen Antrieb,
- wobei der elektrische Antrieb von einer Antriebssteuerung gemäß einem Beschleunigungsprofil von einer Anfangsposition zu einer Endposition verfahren wird,
- wobei das Beschleunigungsprofil bei der Anfangsposition einen Anstieg von 0 auf eine Maximalbeschleunigung und bei der Endposition einen Anstieg von einer Minimalbeschleunigung auf 0 aufweist,
- wobei das Beschleunigungsprofil zwischen der Anfangsposition und der Endposition einen Abfall von der Maximalbeschleunigung auf 0 und einen Abfall von 0 auf die Minimalbeschleunigung aufweist,
- wobei das Beschleunigungsprofil zwischen dem Ansteigen auf die Maximalbeschleunigung und dem Abfallen auf 0 sowie zwischen dem Abfallen auf die Minimalbeschleunigung und dem Ansteigen auf 0 während einer jeweiligen Haltezeit bei der Maximalbeschleunigung und der Minimalbeschleunigung verharrt.

Die vorliegende Erfindung betrifft weiterhin ein Computerprogramm, das Maschinencode umfasst, der von einer Antriebssteuerung für einen elektrischen Antrieb unmittelbar abarbeitbar ist, wobei die Abarbeitung des Maschinencodes durch die Antriebssteuerung bewirkt,
- dass die Antriebssteuerung den elektrischen Antrieb gemäß einem Beschleunigungsprofil von einer Anfangsposition zu einer Endposition verfährt,
- dass das Beschleunigungsprofil bei der Anfangsposition einen Anstieg von 0 auf eine Maximalbeschleunigung und bei der Endposition einen Anstieg von einer Minimalbeschleunigung auf 0 aufweist,
- dass das Beschleunigungsprofil zwischen der Anfangsposition und der Endposition einen Abfall von der Maximalbeschleunigung auf 0 und einen Abfall von 0 auf die Minimalbeschleunigung aufweist und
- dass das Beschleunigungsprofil zwischen dem Ansteigen auf die Maximalbeschleunigung und dem Abfallen auf 0 sowie zwischen dem Abfallen auf die Minimalbeschleunigung und dem Ansteigen auf 0 während einer jeweiligen Haltezeit bei der Maximalbeschleunigung und der Minimalbeschleunigung verharrt.

Die vorliegende Erfindung betrifft weiterhin eine Antriebssteuerung für einen elektrischen Antrieb, wobei die Antriebssteuerung derart ausgebildet ist, dass sie im Betrieb den elektrischen Antrieb gemäß einem derartigen Positionierverfahren steuert.

Die vorliegende Erfindung betrifft weiterhin einen elektrischen Antrieb, wobei der elektrische Antrieb eine derartige Antriebssteuerung aufweist.

Die Beschleunigung wird im Rahmen der vorliegenden Erfindung als vorzeichenbehaftete Größe behandelt. Eine Beschleunigung größer 0 ist also eine "echte" Beschleunigung, die mit einer Erhöhung der korrespondierenden Geschwindigkeit verbunden ist. Eine Beschleunigung kleiner 0 ist eine Verzögerung, die mit einer Verringerung der korrespondierenden Geschwindigkeit verbunden ist.

Der guten Ordnung halber sei weiterhin darauf hingewiesen, dass mit dem Wort "Abfall" nicht Müll und dergleichen gemeint ist, sondern eine Verringerung eines Zahlenwertes, also das Gegenteil eines Anstiegs.

Bei vielen Anwendungen wird ein bewegtes Element mittels eines elektrischen Antriebs bewegt. Hierbei geschieht es oftmals, dass das bewegte Element (bzw. hiermit korrespondierend der elektrische Antrieb) in möglichst kurzer Zeit positioniert werden soll. Beispiele für derartige Anwendungen sind beispielsweise bei Webmaschinen der Greiferantrieb zum Durchfahren des Webfaches sowie sogenannte Pick-and-Place-Anwendungen in verschiedenen Bereichen, beispielsweise in der Verpackungsindustrie oder auch beim Werkzeugwechsel von Werkzeugmaschinen. Im Dauerbetrieb gelangt der elektrische Antrieb - insbesondere die elektrische Maschine des Antriebs - oft an seine thermische Belastungsgrenze.

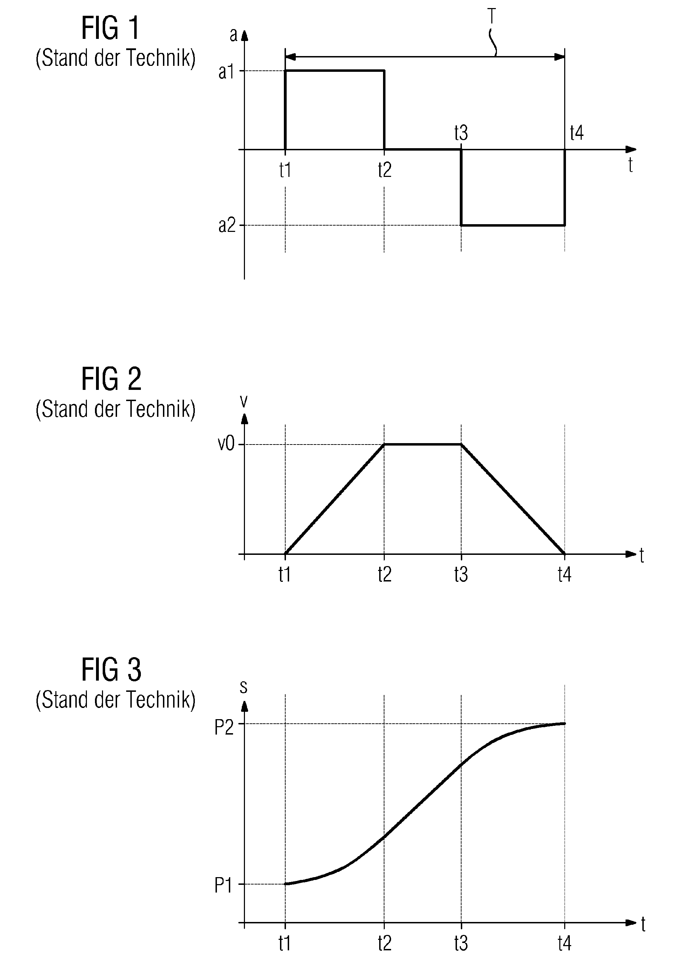

Im konventionellen Stand der Technik wird der elektrische Antrieb in derartigen Fällen von der Antriebssteuerung gemäß den FIG 1 bis 3 meist derart angesteuert, dass der elektrische Antrieb zu einem Zeitpunkt t1, ausgehend von einer Anfangsposition P1, zunächst maximal beschleunigt wird und sodann die Beschleunigung auf 0 abgesenkt wird. Rechtzeitig vor Erreichen einer Endposition wird der elektrische Antrieb, ausgehend von einem Beschleunigungswert = 0, maximal verzögert. Die Beschleunigungen, mit denen der elektrische Antrieb beschleunigt und verzögert wird, sind jedoch nicht die theoretisch maximal möglichen Beschleunigungen und Verzögerungen, sondern nur die tatsächlich maximal auftretenden Beschleunigungen und Verzögerungen. Sie sind derart bestimmt, dass der elektrische Antrieb die dadurch verursachten thermischen Belastungen im Dauerbetrieb verkraftet. Beispielsweise können die entsprechenden Beschleunigungen mit dem maximal zulässigen Dauermoment im Stillstand korrespondieren.

Das Beschleunigungsprofil a(t) - d.h. die Beschleunigung a als Funktion der Zeit t - steigt daher entsprechend der Darstellung in FIG 1 zunächst von 0 auf eine Maximalbeschleunigung a1 an, verharrt sodann während einer Haltezeit bei der Maximalbeschleunigung a1 und wird danach ab einem Zeitpunkt t2 auf 0 abgesenkt. Das Absenken der Beschleunigung a von der Maximalbeschleunigung a1 auf 0 erfolgt im Stand der Technik mit derselben Steilheit wie der vorherige Anstieg von 0 auf die Maximalbeschleunigung a1. Die Maximalbeschleunigung a1 ist, wie bereits erwähnt, darauf bezogen, dass diese Beschleunigung im tatsächlichen Betrieb nicht überschritten wird. Ob der elektrische Antrieb kurzzeitig eine höhere Beschleunigung aufbringen kann oder nicht, ist irrelevant.

In analoger Weise wird beim Verzögern des elektrischen Antriebs vorgegangen: Der Antrieb wird derart angesteuert, dass der elektrische Antrieb ab einem Zeitpunkt t3 maximal verzögert (= negativ beschleunigt) wird und sodann die Verzögerung (= negative Beschleunigung) zu einem Zeitpunkt t4 auf 0 abgesenkt wird. Das Beschleunigungsprofil a(t) fällt daher zunächst von 0 auf eine Minimalbeschleunigung a2 ab, verharrt sodann während einer Haltezeit bei der Minimalbeschleunigung a2 und wird danach auf 0 angehoben. Das Absenken der Beschleunigung a von 0 auf die Minimalbeschleunigung a2 erfolgt mit derselben Steilheit wie der spätere Anstieg von der Minimalbeschleunigung a2 auf 0. Die Differenz zwischen den Zeitpunkten t1 und t4 definiert eine zum Verfahren des elektrischen Antriebs von der Anfangsposition P1 zur Endposition P2 benötigte Fahrzeit T. Die Minimalbeschleunigung a2 ist analog zur Maximalbeschleunigung a1 darauf bezogen, dass diese Beschleunigung im tatsächlichen Betrieb nicht unterschritten wird. Ob der elektrische Antrieb kurzzeitig eine niedrigere Beschleunigung (also eine höhere Verzögerung) aufbringen kann, ist irrelevant.

Wenn der elektrische Antrieb während des Beschleunigens seine maximal mögliche Geschwindigkeit erreicht, liegt zwischen den Zeitpunkten t2 und t3, also dem Absenken der Beschleunigung a von der Maximalbeschleunigung a1 auf den Wert 0 und dem Absenken der Beschleunigung a vom Wert 0 auf die Minimalbeschleunigung a2, eine Pause, während derer das Beschleunigungsprofil a(t) konstant den Wert 0 aufweist. Anderenfalls schließt sich die Verzögerungsphase direkt und unmittelbar an die Beschleunigungsphase an (t2 = t3).

Entsprechend dem Beschleunigungsprofil a(t) steigt eine Verfahrgeschwindigkeit v des elektrischen Antriebs gemäß FIG 2 von 0 auf eine Maximalgeschwindigkeit v0 an und sinkt danach wieder auf Null ab. Gemäß FIG 3 wird durch das Beschleunigungsprofil a(t) und das hiermit korrespondierende Geschwindigkeitsprofil v(t) (siehe FIG 2) der elektrische Antrieb von der Anfangsposition P1 zur Endposition P2 verfahren.

Die Werte für die Maximalbeschleunigung a1 und die Minimalbeschleunigung a2 sind meist betragsmäßig gleich groß. Unabhängig davon, ob die Werte gleich groß sind oder nicht, sind die Werte betragsmäßig jedoch kleiner als diejenigen Beschleunigungen, welche prinzipiell maximal möglich sind. Sie sind stattdessen derart gewählt, dass der elektrische Antrieb die bei diesem Betrieb auftretenden thermischen Verluste abführen kann. Die prinzipiell maximal möglichen Beschleunigungen können im Stand der Technik nicht genutzt werden, da sie zur thermischen Überlastung des elektrischen Antriebs führen würden.

Aus dem Fachaufsatz "Energieoptimale Stellvorgänge und deren Auswirkung auf die Auslegung von rotatorischen und linearen Stellantrieben" von W. Hofmann, erschienen im Tagungsband zur Konferenz "Elektrisch-mechanische Antriebssysteme - Innovationen - Trends - Mechatronik", 23. bis 24.09.2008, Böblingen, ist ein energieoptimiertes Positionierverfahren für einen elektrischen Antrieb bekannt. Das zugehörige Beschleunigungsprofil weist zwischen der Maximalbeschleunigung und der Minimalbeschleunigung einen linearen Abfall der Beschleunigung auf. Die Maximalbeschleunigung und die Minimalbeschleunigung werden nur punktuell angenommen. Der lineare Abfall erfolgt also unmittelbar im Anschluss an das Ansteigen auf die Maximalbeschleunigung. Ebenso erfolgt der Abfall auf 0 unmittelbar im Anschluss an das Erreichen der Minimalbeschleunigung.

Dem Fachaufsatz "Energieeffiziente Bewegungsprofile unter Berücksichtigung technologischer Randbedingungen" von Reimund Neugebauer et al., erschienen im Tagungsband zur Fachtagung Mechatronik 2011, Dresden, ist ein gleich gelagerter Offenbarungsgehalt zu entnehmen. Gleiches gilt für den Fachaufsatz "Strategie zur optimierten Regelung mechatronischer Achsen" von W.-G. Drossel et al., Konferenzpapier zum 1. Internationalen Kolloquium des Spitzentechnologieclusters eniPROD, 2010, Chemnitz.

Die in den genannten Fachaufsätzen erläuterten Beschleunigungsprofile erfordern - im Vergleich zur Vorgehensweise des konventionellen Standes der Technik - eine erheblich größere Dimensionierung des elektrischen Antriebs. Insbesondere muss der elektrische Antrieb in der Spitze eine ca. 50 % höhere Beschleunigung aufbringen können als bei der Vorgehensweise des konventionellen Standes der Technik.

Die Aufgabe der vorliegenden Erfindung besteht darin, Möglichkeiten aufzuzeigen, mittels derer der Betrieb des elektrischen Antriebs unter energetischen Gesichtspunkten verbessert werden kann, ohne den elektrischen Antrieb in nennenswertem Umfang größer dimensionieren zu müssen als im konventionellen Stand der Technik.

Die Aufgabe wird durch ein Positionierverfahren mit den Merkmalen des Anspruchs 1 gelöst. Vorteilhafte Ausgestaltungen des erfindungsgemäßen Positionierverfahrens sind Gegenstand der abhängigen Ansprüche 2 bis 8.

Erfindungsgemäß wird ein Positionierverfahren der eingangs genannten Art dadurch ausgestaltet, dass der Abfall von der Maximalbeschleunigung auf 0 und der Abfall von 0 auf die Minimalbeschleunigung flacher sind als der Anstieg von 0 auf die Maximalbeschleunigung und der Anstieg von der Minimalbeschleunigung auf 0.

Durch diese Vorgehensweise kann - bei gegenüber der Vorgehensweise des Standes der Technik gleichbleibender Fahrzeit - die im elektrischen Antrieb - insbesondere die in der elektrischen Maschine des Antriebs - entstehende mittlere Verlustleistung, d. h. die thermische Belastung, reduziert werden. Alternativ oder zusätzlich kann - bei gegenüber dem Stand der Technik gleichbleibender thermischer Belastung des elektrischen Antriebs - die Fahrzeit des elektrischen Antriebs reduziert werden. Dennoch ist eine stärkere Dimensionierung des elektrischen Antriebs nicht oder nur in äußerst geringfügigen Umfang (maximal ca. 10 %) erforderlich.

Es ist in Einzelfällen möglich, dass die Beschleunigung in Stufen abgesenkt wird. Vorzugsweise sind der Abfall von der Maximalbeschleunigung auf 0 und der Abfall von 0 auf die Minimalbeschleunigung jedoch stetig, insbesondere differenzierbar.

Es ist möglich, dass der Anstieg von 0 auf die Maximalbeschleunigung und der Anstieg von der Minimalbeschleunigung auf 0 ruckbegrenzt sind. Alternativ ist eine nicht ruckbegrenzte Ausgestaltung möglich.

Im einfachsten Fall sind der Abfall von der Maximalbeschleunigung auf 0 und der Abfall von 0 auf die Minimalbeschleunigung linear. Bereits diese Vorgehensweise führt zu einer deutlichen Reduzierung der benötigten Fahrzeit und/oder der anfallenden mittleren Verlustleistung. Besonders optimal ist es jedoch, wenn der Abfall von der Maximalbeschleunigung auf 0 und der Abfall von 0 auf die Minimalbeschleunigung monoton sind - insbesondere streng monoton -, wobei der Abfall bei der Maximalbeschleunigung und der Minimalbeschleunigung maximal und bei der Beschleunigung 0 minimal ist.

Der guten Ordnung halber sei in diesem Zusammenhang darauf hingewiesen, dass die strenge Monotonität nur auf diejenigen Abschnitte bezogen ist, bei denen die Beschleunigung zwischen der Maximalbeschleunigung und 0 bzw. zwischen 0 und der Minimalbeschleunigung liegt. Nicht betrachtet sind in diesem Zusammenhang zum einen die beiden Anstiege von 0 auf die Maximalbeschleunigung und von der Minimalbeschleunigung auf 0 sowie die Haltezeiten, während derer die Beschleunigung konstant gleich der Maximalbeschleunigung oder der Minimalbeschleunigung ist. Nicht betrachtet ist weiterhin ein etwaiger Abschnitt, bei dem die Beschleunigung konstant gleich 0 ist. In einer besonders bevorzugten Ausgestaltung der vorliegenden Erfindung ist das Beschleunigungsprofil derart optimiert, dass bei vorgegebener Fahrzeit eine beim Verfahren des elektrischen Antriebs von der Anfangsposition in die Endposition im elektrischen Antrieb anfallende mittlere Verlustleistung minimiert ist und/oder bei vorgegebener mittlerer Verlustleistung eine zum Verfahren des elektrischen Antriebs von der Anfangsposition in die Endposition erforderliche Fahrzeit minimiert ist.

Es ist möglich, dass die Anfangsposition und/oder die Endposition der Antriebssteuerung vorab bekannt sind. Alternativ ist es möglich, dass die Antriebssteuerung die Anfangsposition und/oder die Endposition entgegennimmt. In diesem Fall ermittelt die Antriebssteuerung das Beschleunigungsprofil in Abhängigkeit von der Anfangsposition und der Endposition. Beispielsweise kann die Antriebssteuerung das Beschleunigungsprofil anhand einer analytischen Beziehung, durch eine numerische Optimierung oder durch Auswahl mindestens einer Kurve einer in der Antriebssteuerung hinterlegten Kurvenschar ermitteln.

Die Aufgabe wird weiterhin durch ein Computerprogramm mit den Merkmalen des Anspruchs 9 gelöst. Vorteilhafte Ausgestaltungen des erfindungsgemäßen Computerprogramms sind Gegenstand der abhängigen Ansprüche 10 und 11.

Erfindungsgemäß bewirkt die Abarbeitung des Maschinencodes durch die Antriebssteuerung - zusätzlich zu den eingangs genannten Maßnahmen -, dass der Abfall von der Maximalbeschleunigung auf 0 und der Abfall von 0 auf die Minimalbeschleunigung flacher sind als der Anstieg von 0 auf die Maximalbeschleunigung und der Anstieg von der Minimalbeschleunigung auf 0.

Vorzugsweise bewirkt die Abarbeitung des Maschinencodes durch die Antriebssteuerung, dass die Antriebssteuerung den elektrischen Antrieb gemäß einer der obenstehend erläuterten vorteilhaften Ausgestaltungen des Positionierverfahrens verfährt.

Das Computerprogramm ist vorzugsweise auf einem Datenträger in maschinenlesbarer Form gespeichert ist. Der Datenträger kann ein Bestandteil der Antriebssteuerung sein. Alternativ kann es sich um einen anderen Datenträger handeln, beispielsweise um einen mobilen Datenträger wie einen USB-Memorystick oder eine SD-Speicherkarte.

Die Aufgabe wird weiterhin durch eine Antriebssteuerung mit den Merkmalen des Anspruchs 12 gelöst. Erfindungsgemäß ist die Antriebssteuerung derart ausgebildet, dass sie im Betrieb den elektrischen Antrieb gemäß einem erfindungsgemäßen Positionierverfahren steuert.

Die Aufgabe wird weiterhin durch einen elektrischen Antrieb mit den Merkmalen des Anspruchs 13 gelöst. Erfindungsgemäß weist der elektrische Antrieb eine erfindungsgemäße Antriebssteuerung auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1 bis 3: Zeitdiagramme,
- FIG 4: eine Vorrichtung mit einem verfahrbaren Element,
- FIG 5 bis 11: Zeitdiagramme.

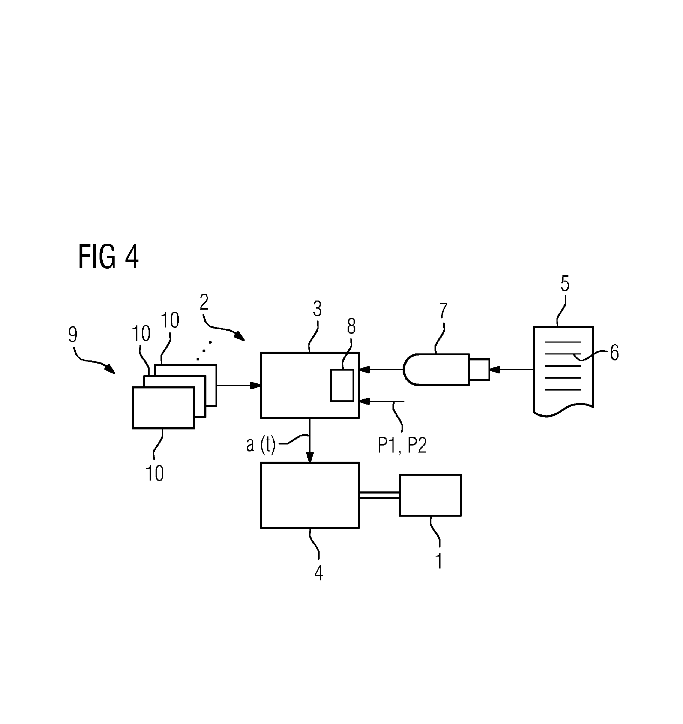

Gemäß FIG 4 soll ein (prinzipiell beliebiges) verfahrbares Element 1 mittels eines elektrischen Antriebs 2, ausgehend von einer Anfangsposition P1, an einer Endposition P2 positioniert werden. Der elektrische Antrieb 2 umfasst eine Antriebssteuerung 3 und eine elektrische Maschine 4. Die elektrische Maschine 4 wirkt - direkt oder indirekt - auf das verfahrbare Element 1.

Die Antriebsteuerung 3 ist in der Regel als softwareprogrammierbare Steuerung ausgebildet. Ihre Funktion und Wirkungsweise wird in diesem Fall durch ein Computerprogramm 5 bestimmt. Das Computerprogramm 5 umfasst Maschinencode 6, der von der Antriebssteuerung 3 unmittelbar abarbeitbar ist. Die Abarbeitung des Maschinencodes 6 bewirkt die entsprechende Funktionalität der Antriebssteuerung 3. Die Programmierung der Antriebssteuerung 3 mit dem Computerprogramm 5 bewirkt also, dass die Antriebsteuerung 3 derart ausgebildet ist, dass sie die entsprechende Funktionalität aufweist.

Das Computerprogramm 5 ist in der Regel auf einem Datenträger 7, 8 in maschinenlesbarer Form - meist in elektronischer Form - gespeichert. Das Computerprogramm 5 kann auf einem USB-Memorystick 7 oder einem anderen mobilen Datenspeicher (beispielsweise einer SD-Speicherkarte) gespeichert sein, über den es in einen internen Speicher 8 der Antriebssteuerung 3 eingespeichert wird. Es ist jedoch ebenso möglich, das Computerprogramm 5 der Antriebssteuerung 3 über eine Anbindung an ein Datennetzwerk (nicht dargestellt) zuzuführen.

Jede Position des verfahrbaren Elements 1 korrespondiert mit einer Position des elektrischen Antriebs 2. Der Einfachheit halber wird nachstehend daher stets auf den elektrischen Antrieb 2 und dessen Position bzw. dessen Positionierung Bezug genommen.

Zu Beginn der Positionierung befindet sich der elektrische Antrieb 2 an der Anfangsposition P1. Eine Geschwindigkeit v, mit welcher das verfahrbare Element 1 und mit ihm der elektrische Antrieb 2 verfahren werden, soll sowohl bei der Anfangsposition P1 als auch bei der Endposition P2 0 sein. Der elektrische Antrieb 2 wird also in der Anfangsposition P1 aus dem Stillstand heraus beschleunigt und in der Endposition P2 zum Stehen gebracht.

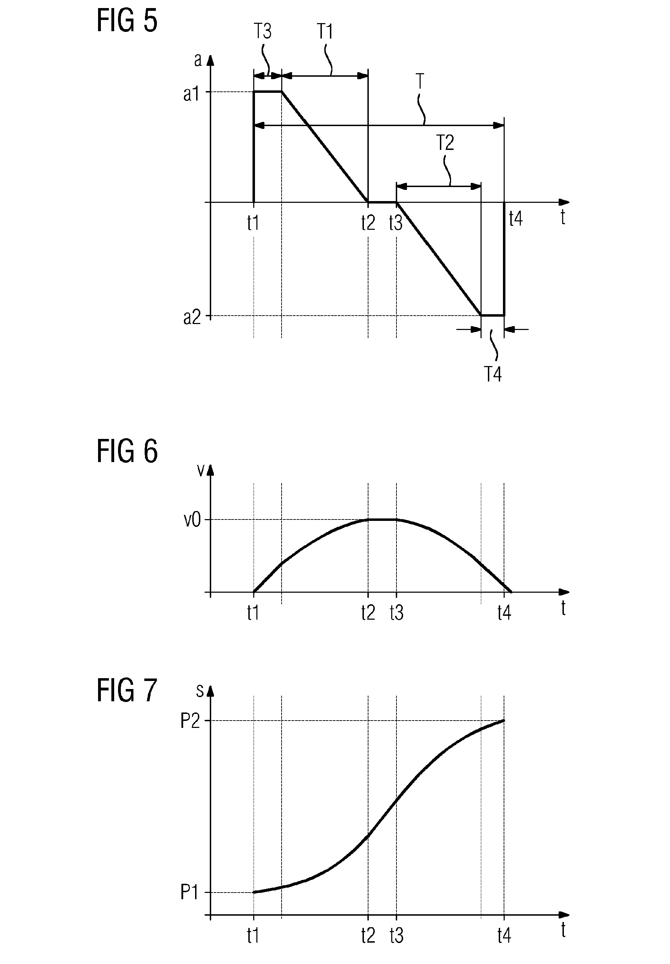

Zum Positionieren des elektrischen Antriebs 2 in der Endposition P2 wird der elektrische Antrieb 2 von der Antriebssteuerung 3 - ausgehend von der Anfangsposition P1 - gemäß einem Beschleunigungsprofil a(t) zu der Endposition P2 verfahren. Das Beschleunigungsprofil a(t) ist erfindungsgemäß ausgestaltet. Es wird nachstehend in Verbindung mit FIG 5 näher erläutert.

Gemäß FIG 5 weist das Beschleunigungsprofil a(t) bei der Anfangsposition P1 bzw. zu einem korrespondierenden Zeitpunkt t1 einen Anstieg von 0 auf eine Maximalbeschleunigung a1 auf. Bei der Endposition P2 bzw. zu einem korrespondierenden Zeitpunkt t4 weist das Beschleunigungsprofil a(t) einen Anstieg von einer Minimalbeschleunigung a2 auf 0 auf. Zwischen der Anfangsposition P1 und der Endposition P2 weist das Beschleunigungsprofil a(t) einen Abfall von der Maximalbeschleunigung a1 auf 0 und einen Abfall von 0 auf die Minimalbeschleunigung a2 auf. Im Gegensatz zum Anstieg der Beschleunigung a von 0 auf die Maximalbeschleunigung a1 und zum Anstieg der Beschleunigung a von der Minimalbeschleunigung a2 auf 0 erfolgt der Abfall der Beschleunigung a von der Maximalbeschleunigung a1 auf 0 jedoch flacher als der Anstieg der Beschleunigung a von 0 auf die Maximalbeschleunigung a1 und auch flacher als der Anstieg der Beschleunigung a von der Minimalbeschleunigung a2 auf 0. Insbesondere erstrecken sich die beiden Abfälle der Beschleunigung a im Gegensatz zu den beiden Anstiegen der Beschleunigung a, die gemäß FIG 5 sprungartig erfolgen, über Zeitspannen T1, T2. Weiterhin verharrt das Beschleunigungsprofil a(t) zwischen dem Ansteigen auf die Maximalbeschleunigung a1 und dem Abfallen auf 0 während einer Haltezeit T3 konstant bei der Maximalbeschleunigung a1. In analoger Weise verharrt das Beschleunigungsprofil a(t) zwischen dem Abfallen auf die Minimalbeschleunigung a2 und dem Ansteigen auf 0 während einer Haltezeit T4 konstant bei der Minimalbeschleunigung a2. FIG 6 zeigt den mit dem Beschleunigungsprofil a(t) korrespondierenden Geschwindigkeitsverlauf v(t). FIG 7 zeigt den mit dem Beschleunigungsprofil a(t) korrespondierenden Verlauf s(t) des Verfahrweges s.

Gemäß den FIG 5 bis 7 - besonders deutlich ersichtlich aus FIG 5 - erfolgt der Abfall der Beschleunigung a von der Maximalbeschleunigung a1 auf 0 stetig. Ebenso erfolgt der Abfall der Beschleunigung a von 0 auf die Minimalbeschleunigung a2 stetig. Vorzugsweise sind die beiden Abfälle entsprechend der Darstellung in FIG 5 weiterhin nicht nur stetig, sondern auch differenzierbar. Der Ruck - also die zeitliche Ableitung der Beschleunigung a nach der Zeit t - weist im Rahmen der beiden Abfälle also einen definierten Wert kleiner 0 auf.

Gemäß der Darstellung in FIG 5 ist eine Phase vorhanden, während derer die Beschleunigung a konstant den Wert Null aufweist. Dies ist zwar stets möglich, aber nur dann zwingend erforderlich, wenn anderenfalls eine maximal mögliche Geschwindigkeit des elektrischen Antriebs 2 überschritten würde.

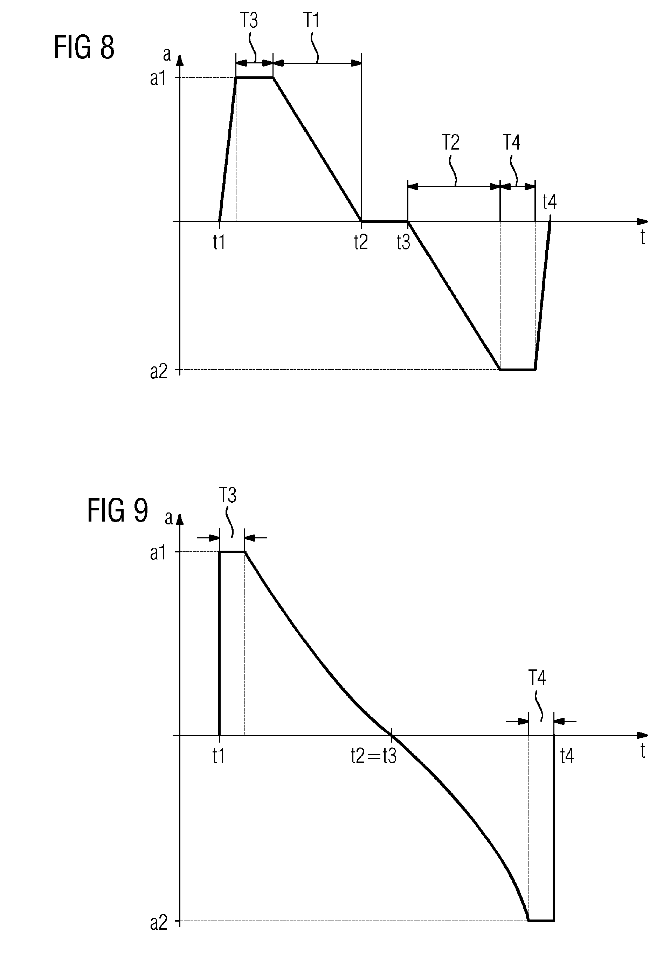

Bei der Ausgestaltung gemäß FIG 5 sind der Anstieg der Beschleunigung a von 0 auf die Maximalbeschleunigung a1 und der Anstieg von der Minimalbeschleunigung a2 auf 0 nicht ruckbegrenzt. Die Anstiege erfolgen also sprungartig. Der Ruck ist nicht definiert. Es ist jedoch alternativ entsprechend der Darstellung in FIG 8 möglich, dass der Anstieg der Beschleunigung a von 0 auf die Maximalbeschleunigung a1 und der Anstieg der Beschleunigung a von der Minimalbeschleunigung a2 auf 0 ruckbegrenzt sind. In diesem Fall weist der Ruck im Rahmen der beiden Anstiege von 0 auf die Maximalbeschleunigung a1 und von der Minimalbeschleunigung a2 auf 0 jeweils den maximal zulässigen Wert auf. Im Rahmen der beiden Anstiege ist die Ruckbegrenzung also wirksam. Die beiden Abfälle der Beschleunigung a von der Maximalbeschleunigung a1 auf 0 und von 0 auf die Minimalbeschleunigung a2 hingegen erfolgen mit einem Ruck, dessen Betrag kleiner als der maximal zulässige Ruck ist.

Weiterhin sind der Abfall der Beschleunigung a von der Maximalbeschleunigung a1 auf 0 und der Abfall der Beschleunigung a von 0 auf die Minimalbeschleunigung a2 bei den Ausgestaltungen der FIG 5 und 8 linear. Die zeitliche Ableitung der Beschleunigung a (= der Ruck) ist also in diesen Abschnitten des Beschleunigungsverlaufs a(t) konstant.

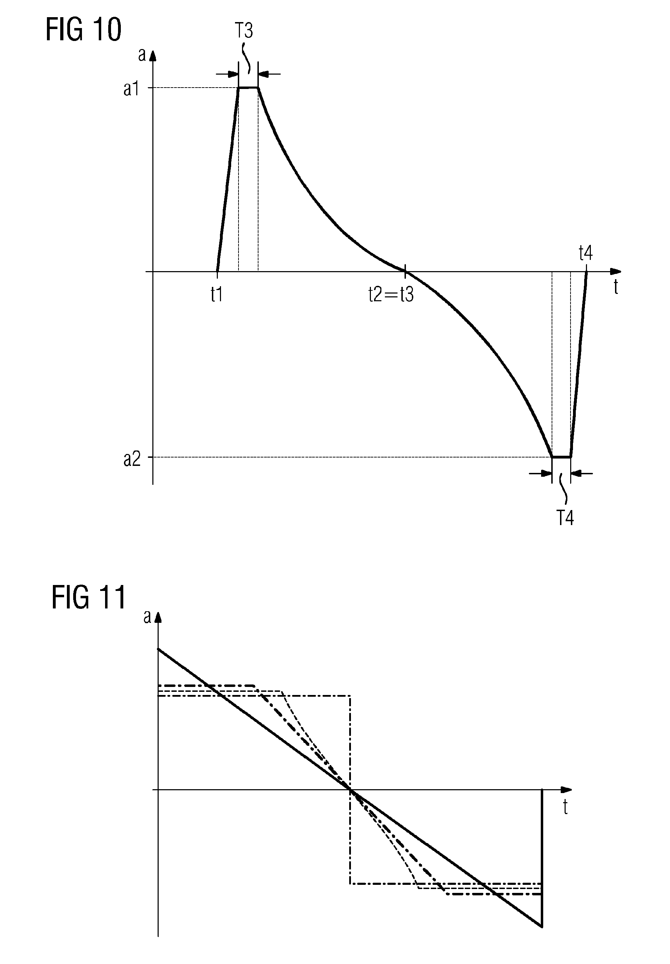

Es ist jedoch alternativ möglich, dass der Abfall der Beschleunigung a von der Maximalbeschleunigung a1 auf 0 und der Abfall der Beschleunigung a von 0 auf die Minimalbeschleunigung a2 monoton sind. Die zeitliche Ableitung der Beschleunigung a (= der Ruck) ist also in diesen Abschnitten des Beschleunigungsverlaufs a(t) zwar kleiner als 0, aber nicht konstant. Betragsmäßig ist der Ruck am kleinsten, wenn die Beschleunigung a den Wert Null aufweist. FIG 9 zeigt die entsprechende Ausgestaltung in dem Fall, dass der Anstieg der Beschleunigung a von 0 auf die Maximalbeschleunigung a1 und der Anstieg der Beschleunigung a von der Minimalbeschleunigung a2 auf 0 nicht ruckbegrenzt sind. FIG 10 zeigt die entsprechende Ausgestaltung in dem Fall, dass der Anstieg der Beschleunigung a von 0 auf die Maximalbeschleunigung a1 und der Anstieg der Beschleunigung a von der Minimalbeschleunigung a2 auf 0 ruckbegrenzt sind.

Der nichtlineare Verlauf der Beschleunigung a kann nach Bedarf bestimmt sein. Beispielsweise können der Abfall der Beschleunigung a von der Maximalbeschleunigung a1 auf 0 und der Abfall der Beschleunigung a von 0 auf die Minimalbeschleunigung a2 jeweils einen linearen Anteil aufweisen, der durch einen relativ schwachen Exponentialanteil ergänzt ist.

Das Beschleunigungsprofil a(t) als Funktion der Zeit t kann nach verschiedenen Kriterien optimiert sein. Beispielsweise kann das Beschleunigungsprofil a(t) derart optimiert sein, dass - bei vorgegebener Fahrzeit T - eine beim Verfahren des elektrischen Antriebs 2 von der Anfangsposition P1 in die Endposition P2 im elektrischen Antrieb 2 anfallende mittlere Verlustleistung minimiert ist. Alternativ ist es möglich, dass bei vorgegebener mittlerer Verlustleistung eine zum Verfahren des elektrischen Antriebs 2 von der Anfangsposition P1 in die Endposition P2 erforderliche Fahrzeit T minimiert ist. Die beiden Kriterien können auch miteinander kombiniert werden. Beispielsweise kann eine sogenannte Kostenfunktion aufgestellt werden, in welche einerseits die beim Verfahren des elektrischen Antriebs 2 anfallende mittlere Verlustleistung und andererseits die zum Verfahren erforderliche Fahrzeit T eingehen. Durch Minimieren der Kostenfunktion können in diesem Fall die Parameter des Beschleunigungsprofils a(t) - beispielsweise die Maximalbeschleunigung a1, die Minimalbeschleunigung a2 und der Verlauf der beiden Abfälle der Beschleunigung a sowie die Dauer einer etwaigen Beschleunigungspause zwischen den beiden Abfällen - bestimmt werden.

Es ist möglich, dass die Anfangsposition P1 und die Endposition P2 vorab - d.h. bereits zum Zeitpunkt, zu welchem die Antriebssteuerung 3 programmiert, konfiguriert oder dergleichen wird - bekannt sind. Alternativ ist es möglich, dass die Anfangsposition P1 und/oder die Endposition P2 nicht vorab bestimmt sind. Beispielsweise kann - je nach Steuerungsaufgabe - von einem beliebigen Startpunkt aus stets ein fester Punkt angefahren werden und später von dem festen Punkt aus zu dem Startpunkt zurückgefahren werden. In diesem Fall entspricht im Rahmen einer ersten Verfahrbewegung der Startpunkt der Anfangsposition P1, der feste Punkt der Endposition P2. Im Rahmen einer zweiten Verfahrbewegung entspricht der feste Punkt der Anfangsposition P1, der Startpunkt der Endposition P2.

Wenn die Anfangsposition P1 und die Endposition P2 vorab bekannt sind, ist es möglich, das entsprechende Beschleunigungsprofil a(t) bereits beim Konfigurieren der Antriebssteuerung 3 - beispielsweise im Rahmen von deren Programmierung - festzulegen. Wenn eine derartige Festlegung vorab nicht möglich oder nicht gewünscht ist - insbesondere also, wenn die Anfangsposition P1 und/oder die Endposition P2 nicht vorab bekannt sind -, nimmt die Antriebssteuerung 3 - siehe FIG 4 - die Anfangsposition P1 und/oder die Endposition P2 entgegen. Sodann ermittelt die Antriebssteuerung 3 in Abhängigkeit von der Anfangsposition P1 und der Endposition P2 das entsprechende Beschleunigungsprofil a(t).

Es ist möglich, dass die Antriebssteuerung 3 das Beschleunigungsprofil a(t) anhand einer analytischen Beziehung ermittelt. Insbesondere wird ein Großteil der insgesamt anfallenden momentanen Verlustleistung durch die sogenannten Kupferverluste der elektrischen Maschine 4 bestimmt. Die Kupferverluste können im wesentlichen als proportional zum Quadrat des Stromes angesetzt werden, mit dem die Wicklung der elektrischen Maschine 4 beaufschlagt wird. Mit einem derartigen Ansatz ist eine geschlossene, analytische Lösung möglich.

Aus der Optimalsteuerungstheorie ist bekannt, dass die Beschleunigung a für ein einfaches kinematisches Modell und ein quadratisches Gütekriterium hinsichtlich des Motorstroms (Stichwort Kupferverluste) einen linearen Beschleunigungsverlauf ergibt. Aus der Anforderung, den gleichen Weg in gleicher Zeit zurückzulegen, lassen sich bei gegebener Maximalbeschleunigung a1 und gegebener Minimalbeschleunigung a2 die unbekannten Parameter in einer geschlossenen, analytischen Lösung ermitteln. Diese Vorgehensweise ist Fachleuten an sich bekannt. Die Rechenleistung der Antriebssteuerung 3 kann ohne weiteres ausreichend sein, um diesen Ansatz in Echtzeit zu lösen. Als Ergebnis ergeben sich insbesondere die in den FIG 5 und 8 dargestellten linearen Beschleunigungsprofile a(t).

Noch besser ist es, wenn zusätzlich zu den Kupferverlusten auch die so genannten Eisenverluste der elektrischen Maschine 4 berücksichtigt werden. In diesem Fall ist eine geschlossene analytische Lösung zwar nicht mehr möglich. Es ist jedoch eine numerische Optimierung möglich. Als Ergebnis ergeben sich insbesondere die in den FIG 9 und 10 dargestellten nichtlinearen Beschleunigungsprofile a(t).

In den Darstellungen der FIG 9 und 10 fallen die Zeitpunkte t2 und t3 zusammen. Dies ist jedoch nicht prinzipiell erforderlich. Zwischen den Zeitpunkten t2 und t3 könnte ebenso eine Pause vorhanden sein, während derer die Beschleunigung a den Wert 0 aufweist.

FIG 11 zeigt - für jeweils gleiche Fahrzeit T - eine Gegenüberstellung der Beschleunigungsprofile a(t) des konventionellen Standes der Technik (Rechteckprofil), einer Verfahrbewegung gemäß den in der Beschreibungseinleitung genannten Fachaufsätzen (Gerade), der erfindungsgemäßen Vorgehensweise unter Berücksichtigung ausschließlich der Kupferverluste (Plateau mit anschließendem linearen Abfall) und der erfindungsgemäßen Vorgehensweise unter Berücksichtigung der Kupferverluste und der Eisenverluste (Plateau mit anschließendem nichtlinearem Abfall). Auch in der Darstellung der FIG 11 fallen die Zeitpunkte t2 und t3 zusammen. Auch hier ist dies - analog zu den FIG 9 und 10 - jedoch nicht prinzipiell erforderlich. Zwischen den Zeitpunkten t2 und t3 könnte auch hier ebenso eine Pause vorhanden sein, während derer die Beschleunigung a den Wert 0 aufweist.

Die Eisenverluste sind erheblich geringer als die Kupferverluste und treten darüber hinaus nur bei höheren Drehzahlen des elektrischen Antriebs 2 in nennenswertem Umfang auf. Eine Berücksichtigung der Eisenverluste ist daher nur dann erforderlich, wenn eine vollständige Optimierung gewünscht ist. Auch unter Berücksichtigung ausschließlich der Kupferverluste ist jedoch eine erhebliche Verbesserung gegenüber der Vorgehensweise des Standes der Technik möglich.

Die numerische Optimierung erfordert eine erheblich höhere Rechenleistung als ein Ermitteln der geschlossenen, analytischen Lösung. Es kann in Einzelfällen möglich sein, dass die Rechenleistung der Antriebssteuerung 3 für die numerische Optimierung ausreichend ist. Oftmals wird die Rechenleistung jedoch nicht ausreichen. In diesem Fall kann in der Antriebsteuerung 3 gemäß FIG 4 eine Kurvenschar 9 mit einer Vielzahl von Kurven 10 hinterlegt sein. In diesem Fall ermittelt die Antriebssteuerung 3 das Beschleunigungsprofil a(t) durch Auswahl mindestens einer Kurve 10 der Kurvenschar 9. Insbesondere kann die Antriebssteuerung 3 zwei oder maximal drei Kurven 10 der Kurvenschar 9 auswählen und eine lineare oder nichtlineare Interpolation der ausgewählten Kurven 10 vornehmen.

Zusammengefasst betrifft die vorliegende Erfindung also folgenden Sachverhalt:
Ein elektrischer Antrieb 2 wird von einer Antriebsteuerung 3 gemäß einem Beschleunigungsprofil a(t) von einer Anfangsposition P1 zu einer Endposition P2 verfahren. Das Beschleunigungsprofil a(t) weist bei der Anfangsposition P1 einen Anstieg von 0 auf eine Maximalbeschleunigung a1 und bei der Endposition P2 einen Anstieg von einer Minimalbeschleunigung a2 auf 0 auf. Zwischen der Anfangsposition P1 und der Endposition P2 weist das Beschleunigungsprofil a(t) einen Abfall von der Maximalbeschleunigung a1 auf 0 und einen Abfall von 0 auf die Minimalbeschleunigung a2 auf. Zwischen dem Ansteigen auf die Maximalbeschleunigung a1 und dem Abfallen auf 0 sowie zwischen dem Abfallen auf die Minimalbeschleunigung a2 und
dem Ansteigen auf 0 verharrt das Beschleunigungsprofil a(t) während einer Haltezeit T3, T4 bei der Maximalbeschleunigung a1 und der Minimalbeschleunigung a2. Der Abfall von der Maximalbeschleunigung a1 auf 0 und der Abfall von 0 auf die Minimalbeschleunigung a2 sind flacher als der Anstieg von 0 auf die Maximalbeschleunigung a1 und der Anstieg von der Minimalbeschleunigung a2 auf 0.

Die vorliegende Erfindung weist viele Vorteile auf. Bei gegenüber dem konventionellen Stand der Technik gleicher Fahrzeit T ist beispielsweise eine Reduzierung der thermischen Belastung des elektrischen Antriebs 2 bis zu 25 % möglich. Es ist sogar bereits dann eine erhebliche Reduzierung der thermischen Belastung des elektrischen Antriebs 2 möglich, wenn die Maximalbeschleunigung a1 und die Minimalbeschleunigung a2 der erfindungsgemäßen Vorgehensweise nur um wenige Prozent größer sind als die Maximalbeschleunigung a1 und die Minimalbeschleunigung a2 der Vorgehensweise des Standes der Technik. Beispielsweise ergibt sich durch die erfindungsgemäße Vorgehensweise bei Werten für die Maximalbeschleunigung a1 und die Minimalbeschleunigung a2, die 3 % größer als die entsprechenden Werte des Standes der Technik sind, bereits eine Reduzierung der thermischen Belastung um ca. 15 %. Bei einer um 7 % größeren Maximalbeschleunigung a1 ergibt sich eine Reduzierung der thermischen Belastung um ca. 20 %. Weiterhin ist es selbstverständlich möglich, die erzielbaren Vorteile der erfindungsgemäßen Vorgehensweise auf die Reduzierung der thermischen Verluste und auf die Reduzierung der Fahrzeit T aufzuteilen.

Weiterhin ergibt sich bei der erfindungsgemäßen Vorgehensweise in der Regel eine niedrigere Maximalgeschwindigkeit v0 als bei der Vorgehensweise des Standes der Technik. Es ist daher zusätzlich eine Optimierung auch dadurch möglich bzw. gegeben, dass der elektrische Antrieb 2 bei der erfindungsgemäßen Vorgehensweise später oder eventuell sogar gar nicht die maximal mögliche Geschwindigkeit - also die Geschwindigkeitsbegrenzung - des elektrischen Antriebs 2 erreicht.

Weiterhin ist es ohne weiteres möglich, beispielsweise durch Anpassen des Computerprogramms 5 der Antriebssteuerung 3 eine bestehende Antriebssteuerung erfindungsgemäß nachzurüsten. Es ist auch möglich, eine Möglichkeit zum Umschalten zwischen einem erfindungsgemäßen Betrieb und einem Betrieb gemäß dem Stand der Technik vorzusehen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Positionierverfahren für einen elektrischen Antrieb (2),
- wobei der elektrische Antrieb (2) von einer Antriebssteuerung (3) gemäß einem Beschleunigungsprofil (a(t)) von einer Anfangsposition (P1) zu einer Endposition (P2) verfahren wird,
- wobei das Beschleunigungsprofil (a(t)) bei der Anfangsposition (P1) einen Anstieg von 0 auf eine Maximalbeschleunigung (a1) und bei der Endposition (P2) einen Anstieg von einer Minimalbeschleunigung (a2) auf 0 aufweist,
- wobei das Beschleunigungsprofil (a(t)) zwischen der Anfangsposition (P1) und der Endposition (P2) einen Abfall von der Maximalbeschleunigung (a1) auf 0 und einen Abfall von 0 auf die Minimalbeschleunigung (a2) aufweist,
- wobei das Beschleunigungsprofil (a(t)) zwischen dem Ansteigen auf die Maximalbeschleunigung (a1) und dem Abfallen auf 0 sowie zwischen dem Abfallen auf die Minimalbeschleunigung (a2) und dem Ansteigen auf 0 während einer jeweiligen Haltezeit (T3, T4) bei der Maximalbeschleunigung (a1) und der Minimalbeschleunigung (a2)verharrt,
**dadurch gekennzeichnet, dass** der Abfall von der Maximalbeschleunigung (a1) auf 0 und der Abfall von 0 auf die Minimalbeschleunigung (a2) flacher sind als der Anstieg von 0 auf die Maximalbeschleunigung (a1) und der Anstieg von der Minimalbeschleunigung (a2) auf 0.

2. Positionierverfahren nach Anspruch 1,
**dadurch gekennzeichnet, dass** der Abfall von der Maximalbeschleunigung (a1) auf 0 und der Abfall von 0 auf die Minimalbeschleunigung (a2) stetig sind.

3. Positionierverfahren nach Anspruch 2,
**dadurch gekennzeichnet, dass** der Abfall von der Maximalbeschleunigung (a1) auf 0 und der Abfall von 0 auf die Minimalbeschleunigung (a2) differenzierbar sind.

4. Positionierverfahren nach Anspruch 1, 2 oder 3,
**dadurch gekennzeichnet, dass** der Anstieg von 0 auf die Maximalbeschleunigung (a1) und der Anstieg von der Minimalbeschleunigung (a2) auf 0 ruckbegrenzt oder nicht ruckbegrenzt sind.

5. Positionierverfahren nach einem der obigen Ansprüche,
**dadurch gekennzeichnet, dass** der Abfall von der Maximalbeschleunigung (a1) auf 0 und der Abfall von 0 auf die Minimalbeschleunigung (a2) linear sind oder dass der Abfall von der Maximalbeschleunigung (a1) auf 0 und der Abfall von 0 auf die Minimalbeschleunigung (a2) monoton sind, wobei der Abfall bei der Maximalbeschleunigung (a1) und der Minimalbeschleunigung (a2) maximal und bei der Beschleunigung (a) 0 minimal ist.

6. Positionierverfahren nach einem der obigen Ansprüche,
**dadurch gekennzeichnet, dass** das Beschleunigungsprofil (a(t)) derart optimiert ist, dass bei vorgegebener Fahrzeit (T) eine beim Verfahren des elektrischen Antriebs (2) von der Anfangsposition (P1) in die Endposition (P2) im elektrischen Antrieb anfallende mittlere Verlustleistung minimiert ist und/oder bei vorgegebener mittlerer Verlustleistung eine zum Verfahren des elektrischen Antriebs (2) von der Anfangsposition (P1) in die Endposition (P2) erforderliche Fahrzeit (T) minimiert ist.

7. Positionierverfahren nach einem der obigen Ansprüche,
**dadurch gekennzeichnet, dass** die Antriebssteuerung (3) die Anfangsposition (P1) und/oder die Endposition (P2) entgegennimmt und dass die Antriebssteuerung (3) das Beschleunigungsprofil (a(t)) in Abhängigkeit von der Anfangsposition (P1) und der Endposition (P2) ermittelt.

8. Positionierverfahren nach Anspruch 7,
**dadurch gekennzeichnet, dass** die Antriebssteuerung (3) das Beschleunigungsprofil (a(t)) anhand einer analytischen Beziehung, durch eine numerische Optimierung oder durch Auswahl mindestens einer Kurve (10) einer in der Antriebssteuerung (3) hinterlegten Kurvenschar (9) ermittelt.

9. Computerprogramm, das Maschinencode (6) umfasst, der von einer Antriebssteuerung (3) für einen elektrischen Antrieb (2) unmittelbar abarbeitbar ist, wobei die Abarbeitung des Maschinencodes (6) durch die Antriebssteuerung (3) bewirkt,
- dass die Antriebssteuerung (3) den elektrischen Antrieb (2) gemäß einem Beschleunigungsprofil (a(t)) von einer Anfangsposition (P1) zu einer Endposition (P2) verfährt,
- dass das Beschleunigungsprofil (a(t)) bei der Anfangsposition (P1) einen Anstieg von 0 auf eine Maximalbeschleunigung (a1) und bei der Endposition (P2) einen Anstieg von einer Minimalbeschleunigung (a2) auf 0 aufweist,
- dass das Beschleunigungsprofil (a(t)) zwischen der Anfangsposition (P1) und der Endposition (P2) einen Abfall von der Maximalbeschleunigung (a1) auf 0 und einen Abfall von 0 auf die Minimalbeschleunigung (a2) aufweist,
- dass das Beschleunigungsprofil (a(t)) zwischen dem Ansteigen auf die Maximalbeschleunigung (a1) und dem Abfallen auf 0 sowie zwischen dem Abfallen auf die Minimalbeschleunigung (a2) und dem Ansteigen auf 0 während einer jeweiligen Haltezeit (T3, T4) bei der Maximalbeschleunigung (a1) und der Minimalbeschleunigung (a2)verharrt und
- dass der Abfall von der Maximalbeschleunigung (a1) auf 0 und der Abfall von 0 auf die Minimalbeschleunigung (a2) flacher sind als der Anstieg von 0 auf die Maximalbeschleunigung (a1) und der Anstieg von der Minimalbeschleunigung (a2) auf 0.

10. Computerprogramm nach Anspruch 9,
**dadurch gekennzeichnet, dass** die Abarbeitung des Maschinencodes (6) durch die Antriebssteuerung (3) bewirkt, dass die Antriebssteuerung (3) den elektrischen Antrieb (2) gemäß einem Positionierverfahren nach einem der Ansprüche 2 bis 8 verfährt.

11. Computerprogramm nach Anspruch 9 oder 10,
**dadurch gekennzeichnet, dass** es auf einem Datenträger (7, 8) in maschinenlesbarer Form gespeichert ist.

12. Antriebssteuerung für einen elektrischen Antrieb (2), wobei die Antriebssteuerung derart ausgebildet ist, dass sie im Betrieb den elektrischen Antrieb (2) gemäß einem Positionierverfahren nach einem der Ansprüche 1 bis 8 steuert.

13. Elektrischer Antrieb, wobei der elektrische Antrieb eine Antriebssteuerung (3) nach Anspruch 12 aufweist.
